# EUROPÄISCHE PATENTANMELDUNG

(11) **EP 2 282 488 A1**
(43) Veröffentlichungstag der Anmeldung: **09.02.2011**
(21) Anmeldenummer: 10169985.8
(22) Anmeldetag: 19.07.2010
(51) Int. Cl.: H04M 1/02, H04M 1/03

(54) **Mobiltelefon mit einem Gehäuse**

(30) Priorität: 28.07.2009 DE 102009035057
(71) Anmelder: Gigaset Communications GmbH, 81379 München (DE)
(72) Erfinder: Kanders, Michael, 44795, Bochum (DE); Pflaum, Karl-Heinz, 46395, Bocholt (DE); Trummer, Frank, 46282, Dorsten (DE); Westhoff, Ludger, 46354, Südlohn (DE)
(74) Vertreter: Michalski Hüttermann & Partner Patentanwälte

(57) **Zusammenfassung**

Die Erfindung betrifft ein Mobiltelefon mit einem Gehäuse, wobei das Gehäuse eine Oberschale (1) und eine Unterschale (2) aufweist, die Oberschale (1) und die Unterschale (2) zur Ausbildung des Gehäuses wenigstens teilweise überlappend zueinander angeordnet sind, so dass im Bereich der Überlappung zwischen der Oberschale (1) und der Unterschale (2) ein Spalt (3) ist, und das Verhältnis Spaltlänge zu Spaltbreite des Spalts (3) wenigstens 30 : 1 ist. Durch eine derartige erfindungsgemäße Ausgestaltung eines Gehäuses werden, im Gegensatz zu aus dem Stand der Technik bekannten Gehäusen für Mobiltelefone, keine Zusatzteile und/oder aufwändige Fertigungsprozesse benötigt, um gemäß der Erfindung das Gehäuse akustisch dicht zu gestalten.

## Beschreibung

Die Erfindung betrifft ein Mobiltelefon mit einem Gehäuse, wobei das Gehäuse eine Oberschale und eine Unterschale aufweist.

Mobiltelefone zur drahtlosen Kommunikation sind aus dem Stand der Technik gut bekannt und umfassen in der Regel einen Lautsprecher, ein Mikrofon, ein Bedienteil, wie beispielsweise eine Tastatur und eine Anzeige, eine Steuerung, ein Funkteil, wie beispielsweise ein Sendeempfänger und eine Antenne, und eine Stromversorgung, wie beispielsweise einen Akkumulator, auf. Derartige aus dem Stand der Technik bekannte Mobiltelefone weisen vielfach ein Gehäuse aus einem Kunststoff auf, wobei das Gehäuse aus einer Oberschale und einer Unterschale ausgeführt ist. Vielfach sind der Lautsprecher, das Mikrofon und das Bedienteil an der Oberschale angeordnet, wobei das durch die Oberschale und die Unterschale ausgebildete Gehäuse die Steuerung, das Funkteil sowie die Stromversorgung aufnimmt. Die vorgenannten Komponenten werden bei der Montage des Mobiltelefons in die Oberschale und/oder in die Unterschale eingesetzt bzw. befestigt, bevor die Oberschale und die Unterschale zur Ausbildung des Gehäuses zusammengesetzt werden. Zur Fixierung der Oberschale mit der Unterschale können beispielsweise Haken oder sonstige Rastelemente zum Verrasten der Oberschale mit der Unterschale vorgesehen sein.

Die akustische Qualität, also beispielsweise der Frequenzgang und/oder die Dynamik, des derart in das Mobiltelefon integrierte Lautsprechers hängt von verschiedenen Faktoren ab, wie beispielsweise von der mechanischen Verbindung zwischen der Oberschale und der Unterschale. Um "akustische Undichtigkeiten" des Gehäuses zu vermeiden, die in einer schlechten Klangqualität des Mobiltelefons resultieren, ist es aus dem Stand der Technik bekannt, Schaumstoff auf die Oberschale und/oder die Unterschale zu kleben, um eine Abdichtung des Gehäuses zu erreichen. Die dadurch entstehenden Öffnungskräne müssen jedoch durch Verschraubung des Gehäuses aufgenommen werden, was sich nachteilig bei den Herstellungskosten aufwirkt. Auch das Verkleben von Öffnungen des Gehäuses, also beispielsweise Öffnungen für das Bedienteil oder das Mikrofon, ist aufwändig und resultiert, ebenso wie die Abdichtung mit Schaumstoff, bei den aus dem Stand der Technik bekannten Mobiltelefonen in einer vergleichsweise schlechten akustischen Klangqualität, in einem sogenannten "akustischen Kurzschluss".

Daher ist es die Aufgabe der Erfindung, ein Gehäuse für ein Mobiltelefon anzugeben, das eine verbesserte akustische Klangqualität ertnöglicht, die in einfacher und/oder kostengünstiger Weise realisierbar ist.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Demnach wird diese Aufgabe gelöst durch ein Mobiletelefon mit einem Gehäuse, wobei das Gehäuse eine Oberschale und eine Unterschale aufweist, die Oberschale und die Unterschale zur Ausbildung des Gehäuses wenigstens teilweise überlappend zueinander angeordnet sind, so dass im Bereich der Überlappung zwischen Oberschale und Unterschale ein Spalt ist, dadurch gekennzeichnet, dass der Spalt frei von Dämm- und/oder Dichtmaterial und akustisch dicht ist

Mit einer bevorzugten Ausgestaltung der Erfindung wird Mobiltelefon mit einem Gehäuse bereitgestellt, wobei das Gehäuse eine Oberschale und eine Unterschale aufweist, die Oberschale und die Unterschale zur Ausbildung des Gehäuses wenigstens teilweise überlappend zueinander angeordnet sind, so dass im Bereich der Überlappung zwischen der Oberschale und der Unterschale ein Spalt ist, und das Verhältnis Spaltlänge zu Spaltbreite des Spalts wenigstens 30:1 ist.

Erfindungsgemäß wird damit ein Mobiltelefon mit einem Gehäuse bereitgestellt, wobei das Gehäuse aufgrund der Ausgestaltung des Verhältnisses Spaltlänge zu Spaltbreite des Spalts von wenigstens 30:1 im Vergleich zu den aus dem Stand der Technik bekannten Gehäusen für Mobiltelefonen eine verbesserte Klangqualität aufweist. Dadurch, dass der derart geschaffene Spalt mit einem Verhältnis der Spaltlänge zur Spaltbreite von wenigstens 30:1 einen hohen Strömungswiderstand bewirkt, kann das Gehäuse als akustisch dicht betrachtet werden. Überraschenderweise wurde also gefunden, dass durch Schaffung eines derart engen und langen Spaltes gemäß der Erfindung der Schalldruckpegel unterhalb der Resonanzfrequenz des Gehäuses um wenigstens 3 dB angehoben ist, somit also die "Trennfuge" zwischen der Oberschale und der Unterschale, also der Spalt, im akustisch dicht ist. Vorzugsweise liegen die Oberschale und die Unterschale im Bereich der Überlappung aneinander an. Ganz besonders bevorzugt liegen die Oberschale und die Unterschale im Bereich der Überlappung eng aneinander an.

Durch eine derartige erfindungsgemäße Ausgestaltung eines Gehäuses werden, im Gegensatz zu aus dem Stand der Technik bekannten Gehäusen für Mobiltelefone, keine Zusatzteile wie Dämm- oder Dichtstoffe und/oder aufwändige Fertigungsprozesse benötigt, um gemäß der Erfindung das Gehäuse akustisch dicht zu gestalten. Ebenfalls benötigt das erfindungsgemäße Gehäuse bzw. der erfindungsgemäße Spalt keine manuellen Zusatzarbeiten, wie beispielsweise den Einsatz eines Verbundwerkstoffs und/oder eine aufwändige Isolierung oder Dichtung mit einem Schaumstoff oder dergleichen als Dicht- oder Dämmstoff, und kann daher besonders einfach und/oder kostengünstig zur akustischen Abdichtung eines Gehäuses verwendet werden. Ebenfalls ermöglicht das erfindungsgemäße Gehäuse die Erfüllung zukürtftiger Qualitätsstandards, wie beispielsweise CAT-iq, auf besonders einfache und/oder kostengünstige Herstellungsweise.

Durch den Verzicht auf Dichtmittel in dem Spalt zwischen Ober- und Unterschale und die akustisch dichte Ausgestaltung des Spaltes durch ein geeignetes Spaltlängen zu Spaltbreitenverhältnis entfällt vorteilhafter Weise der Arbeitsschritt des Einbringens des Dichtmittels. Durch den damit wegfallenden Arbeitsschritt ist eine schnellere und kostengünstigere Fertigung möglich, was neben der verbesserten Sprachqualität einen weiteren Vorteil darstellt.

Grundsätzlich kann das erfindungsgemäße Verhältnis von Spaltlänge zu Spaltbreite des Spalts wenigstens 30:1 betragen, um die erfindungsgemäße verbesserte Klangqualität zu erhalten. Gemäß einer weiteren bevorzugten Ausfilhrutigsform der Erfindung beträgt das Verhältnis Spaltlänge zu Spaltbreite des Spalts wenigstens 40:1, 50:1, 75:1, 100:1, 200:1, 500:1, 1000:1, 5000:1 oder 10000:1. Durch eine Vergrößerung des Verhältnisses Spaltlänge zu Spaltbreite des Spaltes lässt sich der im Spalt entstehende Strömungswiderstand vergrößern, so dass das Gehäuse bzw. der Spalt akustisch "dicht" wird,

Grundsätzlich können die Oberschale und die Unterschale im Bereich der Überlappung beliebig ausgestaltet sein. Gemäß einer weiteren bevorzugten Ausführungsform der Erfindung ist jedoch vorgesehen, dass im Bereich der Überlappung die Oberschale gegenüber der Unterschale verschiebbar ist. Die Oberschale und/oder die Unterschale können als beliebige Gehäuseteile zur Ausbildung eines Gehäuses für das Mobiltelefon ausgestaltet sein. Bevorzugt sind die Oberschale und/oder die Unterschale aus einem Kunststoff ausgebildet. Weiterhin ist bevorzugt, dass die Oberschale und/oder die Unterschale Öffnungen zur Aufnahme für einen Lautsprecher, ein Mikrofon und/oder ein Bedienteil aufweisen.

Gemäß einer weiteren bevorzugten Ausführungsform der Erfindung weist die Oberschale und die Unterschale jeweils eine innere Seite und eine äußere Seite auf, wobei die innere Seite dem Mittelpunkt des Gehäuses zugewandt ist, die äußere Seite dem Mittelpunkt des Gehäuses abgewandt ist und der Spalt jeweils nur an einer der beiden Seiten angeordnet ist. Durch eine derartige Ausgestaltung lässt sich das erfindungsgemäße Gehäuse besonders einfach realisieren, da keine weiteren Materialien, wie beispielsweise eine Rippe und/oder eine die Rippe aufnehmende Nut an der Oberschale und/oder an der Unterschale zur Ausbildung des erfindungsgemäßen Spaltes benötigt werden. Demnach ist also bevorzugt, dass die Oberschale und die Unterschale nicht derart zueinander angeordnet sind, dass beispielsweise die Unterschale keine V-förniige Ausnehmung zur Aufnahme der Oberschale oder einer Nut der Oberschale aufweist.

Weiterhin ist bevorzugt, dass die Oberschale und die Unterschale jeweils einen Rand atifweisen. Grundsätzlich können die Oberschale und die Unterschale an ihrem Teil des Randes überlappend angeordnet sein. Es ist jedoch bevorzugt, dass die Oberschale und die Unterschale jeweils entlang ihres gesamten Randes überlappend zueinander angeordnet sind. Derart ausgestaltet kann die akustische Klangqualität weiter verbessert werden.

Gemäß einer anderen bevorzugten Ausführungsform der Erfindung ist vorgesehen, dass im Bereich der Überlappung die Unterschale die Oberschale derart umfasst, dass der Spalt zwischen der dem Mittelpunkt des Gehäuses abgewandten äußeren Seite der Oberschale und der dem Mittelpunkt des Gehäuses zugewandten inneren Seite der Unterschale angeordnet ist. Demnach ist also bevorzugt, dass die Unterschale die Oberschale umgreift, also die Unterschale in ihrem Querschnitt größer ist als die Oberschale in ihrem Querschnitt, damit also der Spalt nur an einer Seite der Oberschale ausgebildet ist.

Weiterhin ist gemäß einer anderen bevorzugten Ausführungsform der Erfindung vorgesehen, dass die Oberschale und die Unterschale im Bereich der Überlappung parallel zueinander angeordnet sind. Ebenfalls ist bevorzugt, dass der Spalt im Wesentlichen senkrecht zum Mittelpunkt des Gehäuses angeordnet ist. Weiterhin ist bevorzugt, dass das Gehäuse, wie aus dem Stand der Technik bekannt, im Schnitt eine ovalartige Form aufweist, wobei der Spalt an den Schnalseiten der ovalartigen Form angeordnet ist. Gemäß einer anderen bevorzugten Ausführungsform der Erfindung ist vorgesehen, dass der Spalt eine Krümmung ≤ 90° aufweist. In diesem Zusammenhang ist bevorzugt, dass der Spalt eine Krümmung ≤ 60°, ≤ 45° oder ≤ 30° aufweist. Ganz besonders ist bevorzugt, dass der Spalt im Wesentlichen gerade verläuft.

Grundsätzlich können die Oberschale und die Unterschale an ihren jeweiligen Rändern eine unterschiedliche Überlappung aufweisen. Es ist jedoch bevorzugt, dass die Spaltlänge die durchschnittliche Länge der Überlappung zwischen der Oberschale und der Unterschale ist. Ganz besonders ist bevorzugt, dass die Spaltbreite der durchschnittliche Abstand zwischen der Oberschale und der Unterschale im Bereich der Überlappung ist, vorzugsweise jedoch jeweils entlang des gesamten Randes der Oberschale und der Unterschale.

Grundsätzlich können die Oberschale und die Unterschale zur Ausbildung des Gehäuses beliebig miteinander verbunden sein. Gemäß einer weiteren ganz besonders bevorzugten Ausführurtgsform der Erfindung ist jedoch vorgesehen, dass die Unterschale einen Rasthaken aufweist, die Oberschale eine Aufnahme für den Rasthaken aufweist, der Rasthaken in die Aufnahme einrastbar ist und der Rasthaken im Bereich der Überlappung angeordnet ist. In diesem Zusammenhang ist ganz besonders bevorzugt, dass im Bereich der Aufnahme für den Rasthaken die Oberschale durchgehend ausgebildet ist. Mit anderen Worten ist vorgesehen, dass der Rasthaken zum Verrasten der Oberschale mit der Unterschale in eine geschlossene Aufnahme eingreift, also auch im Bereich der Aufnahme für den Rasthaken der Spalt durchgehend ausgebildet ist und insofern der Spalt nicht durch eine Öffnung und/oder ein Loch zur Aufnahme des Rasthakens unterbrochen ist. Durch eine derartige Ausgestaltung lässt sich zum einen die Oberschale besonders einfach mit der Unterschale verbinden und zum anderen wird durch eine derartige Verbindung der Oberschale mit der Unterschale keine akustische Undichtigkeit des Gehäuses geschaffen,

Weiterhin ist gemäß einer anderen Ausführungsform der Erfindung bevorzugt, dass das Mobiltelefon einen Gürtelclip aufweist, der Gürtelclip an der Unterschale befestigbar ist und die Unterschale zur Befestigung des Gürtelclips durchgehend ausgebildet ist. Es ist also vorgesehen, den Gürtelclip derart an dem Mobiltelefon zu befestigen, dass, im Gegensatz zu den Stand der Technik bekannten Befestigungseinrichtungen für einen Gürtelclip, das Gehäuse keine Bohrung oder ein Loch zur Aufnahme des Gürtelclips aufweist, somit also keine akustische Undichtigkeit durch Anbringen des Gürtelclips geschaffen wird. Mit anderen Worten erlaubt eine derartige Ausgestaltung, einen Gürtelclip an dem Gehäuse vorzusehen, ohne die Klangqualität des Mobiltelefons störend zu beeinflussen.

Grundsätzlich können weitere aus dem Stand der Technik bekannte Maßnahmen ergriffen werden, um die Klangqualität des Gehäuses eines Mobiltelefons zu erhöhen. Gemäß einer weiteren bevorzugten Ausführungsform der Erfindung ist vorgesehen, dass das Mobiltelefon eine Tastaturmatte und eine Dichtfläche aufweist, und die Dichtfläche umtaufend zwischen der Tastaturmatte und der Oberschale angeordnet ist. Durch eine derartige Ausgestaltung ist, neben des erfindungsgemäßen Spaltes, die Klangqualität, also die akustische Dichtigkeit, weiter verbesserbar.

Nachfolgend wird die Erfindung unter Bezugnahme auf die Zeichnung weiter im Detail erläutert. In der Zeichnung zeigt:
- Fig. 1: ein Gehäuse eines Mobiltelefons gemäß einem bevorzugten Ausführungsbeispiel der Erfindung in einer Schnittansicht,
- Fig. 2: das Gehäuse des Mobiltelefons mit einem Rasthaken gemäß einem weiteren bevorzug- ten Ausführungsbeispiel der Erfindung in einer weiteren Schnittansicht, und
- Fig. 3: das Gehäuse des Mobiltelefons mit einem Gürtelclip gemäß einem weiteren bevorzug- ten Ausführungsbeispiel der Erfindung in einer Schnittansicht.

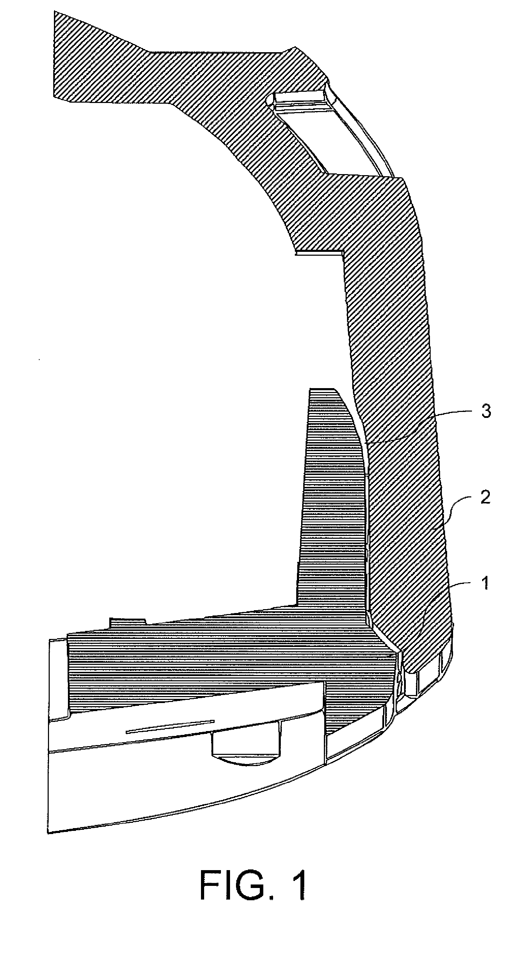

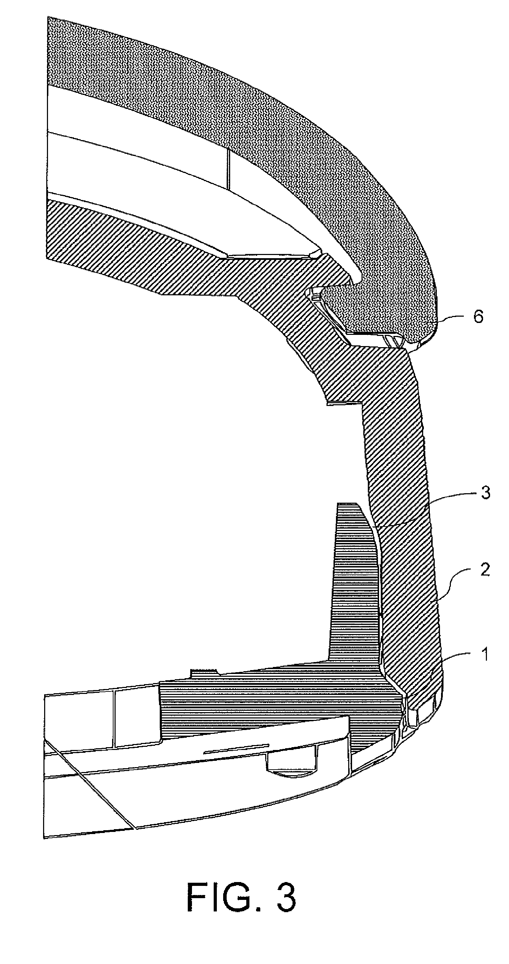

Aus Fig. 1 bis Fig. 3 ist ein Mobiltelefon mit einem Gehäuse gemäß einem bevorzugten Ausführungsbeispiel der Erfindung ersichtlich, wobei das Gehäuse eine Oberschale 1 und eine Unterschale 2 aufweist. Die Oberschale 1 und die Unterschale 2 sind aus einem aus dem Stand der Technik bekannten Material, wie beispielsweise Kunststoff, hergestellt und sind zur Ausbildung des Gehäuses derart zueinander angeordnet, dass die Unterschale 2 die Oberschale 1 umfasst und sich dabei wenigstens teilweise die Oberschale 1 und die Unterschale 2 gegenseitig überlappen. Im Bereich der Überlappung wird durch eine derartige Anordnung der Oberschale 1 und der Unterschale 2 ein Spalt 3 ausgebildet, wobei der Spalt 3 im Wesentlichen senkrecht zum Mittelpunkt des Gehäuses verläuft.

Überraschenderweise wurde gefunden, dass durch eine Ausgestaltung des Verhältnisses Spaltlänge zu Spaltbreite des Spalts 3 von wenigstens 30:1 eine akustische Dichtigkeit des Gehäuses erreicht wird, somit das erfindungsgemäße Gehäuse eine, gegenüber anderen aus dem Stand der Technik bekannten Gehäusen für Mobiltelefonen, deutlich verbesserte Klangqualität ermöglicht. Die akustische Dichtheit wird dabei erfindungsgemäß ohne den Einsatz von Dichtmitteln wie Schaumstoffdichtungen, Zellkautschuk,Silikondichtungen oder dergleichen lediglich durch die erfindutigsgemäße Ausgestaltung der Spaltlänge zur Spaltbreite erreicht. Die Ausbildung des Spaltes 3 erfolgt alleinig durch die Überlappung der Oberschale 1 mit der Unterschale 2, nicht jedoch beispielsweise durch eine an Oberschale 1 oder Unterschale 2 vorgesehene V-Nut zur Aufnahme einer Rippe der Unterschale 2 bzw. der Obersehale 1 oder zur Aufnahme der Unterschale 2 bzw. der Oberschale 1.

Durch Ausbildung des Spaltes 3 als schmalen Schallkanal wird ein derart hoher Strömungswiderstand in dem Spalt 3 erzeugt, dass das Gehäuse als akustisch dicht zu bezeichnen ist. Es wurde gefunden, dass der Schalldruckpegel unterhalb der Resonanzfrequenz des erfindungsgemäßen Gehäuses durch eine derartige Ausgestaltung des Spaltes 3, also des Verhältnisses Spaltlänge zu Spaltbreite des Spaltes 3 von wenigstens 30:1, um wenigstens 3 dB angehoben ist. Somit erlaubt das erfindungsgemäße Gehäuse eine verbesserte Klangqualität, beispielsweise durch einen in dem Gehäuse integrierten, nicht dargestellten, Lautsprecher.

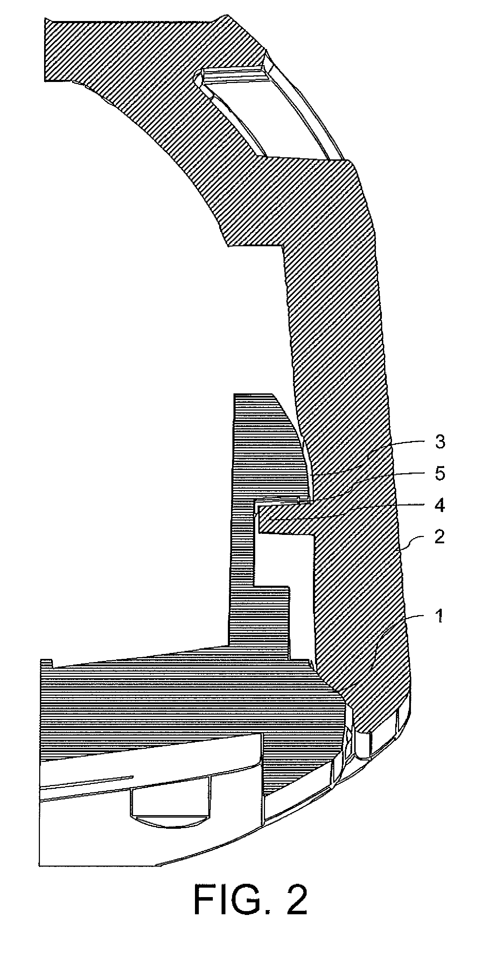

Wie weiterhin aus Fig. 2 ersichtlich, weist die Unterschale 2 einen Rasthaken 4 zum Verrasten in einer Aufnahme 5 für den Rasthaken der Oberschale 1 auf, Im Bereich 5 der Aufnahme für den Rasthaken 4 ist die Oberschale 1 dazu durchgehend ausgebildet, weist also keine Öffnung oder ein Loch auf, so dass durch eine derartige Ausgestaltung keine akustische Undichtigkeit des Gehäuses resultiert.

Gemäß einem weiteren bevorzugten Ausführungsbeispiel der Erfindung weist das Mobiltelefon einen Gürtelclip 6 auf, wobei der Gürtelclip 6 an der Unterschale 2 befestigt ist, und die Unterschale 2 zur Befestigung des Gürtelclips 6 durchgehend ausgebildet ist. Mit anderen Worten weist die Unterschale 2 also keine Bohrung oder ein Loch zur Befestigung des Gürtelclips 6 auf, so dass auch durch eine derartige Ausgestaltung der Erfindung keine akustische Undichtigkeit des Gehäuses resultiert.

Durch eine derartige erfindungsgemäße Ausgestaltung eines Gehäuses werden, im Gegensatz zu aus dem Stand der Technik bekannten Gehäusen für Mobiltelefone, keine Zusatzteile und/oder aufwändige Fertigungsprozesse benötigt, um gemäß der Erfindung das Gehäuse akustisch dicht zu gestalten.

## Patentansprüche

1. Mobiletelefon mit einem Gehäuse, wobei das Gehäuse eine Oberschale (1) und eine Unterschale (2) aufweist, die Oberschale (1) und die Unterschale (2) zur Ausbildung des Gehäuses wenigstens teilweise überlappend zueinander angeordnet sind, so dass im Bereich der Überlappung zwischen Oberschale (1) und Unterschale (2) ein Spalt (3) ist, **dadurch gekennzeichnet, dass** der Spalt (3) frei von Dämm- und/oder Dichtmaterial und akustisch dicht ist.

2. Mobiltelefon nach Anspruch 1, wobei das Verhältnis Spaltlänge zu Spaltbreite des Spalts (3) wenigstens 30 : 1, 40 : 1, 50: 1, 75 : 1, 100 : 1, 200 : 1, 500: 1, 1000 : 1, 5000 : 1 oder 10000 : 1 ist.

3. Mobiltelefon nach einem der vorhergehenden Ansprüche, wobei im Bereich der Überlappung die Oberschale (1) gegenüber der Unterschale (2) verschiebbar ist.

4. Mobiltelefon nach einem der vorhergehenden Ansprüche, wobei die Oberschale (1) und die Unterschale (2) jeweils eine innere Seite und eine äußere Seite aufweisen, die innere Seite dem Mittelpunkt des Gehäuses zugewandt ist, die äußere Seite dem Mittelpunkt des Gehäuses abgewandt ist und der Spalt (3) jeweils nur an einer der beiden Seiten angeordnet ist.

5. Mobiltelefon nach einem der vorhergehenden Ansprüche, wobei die Oberschale (1) und die Unterschale (2) jeweils einen Rand aufweisen, und die Oberschale (1) und die Unterschale (2) jeweils entlang ihres gesamten Randes überlappend zueinander angeordnet sind.

6. Mobiltelefon nach einem der vorhergehenden Anspruch, wobei im Bereich der Überlappung die Unterschale (2) die Oberschale (1) derart umfasst, dass der Spalt (3) zwischen der dem Mittelpunkt des Gehäuses abgewandten äußeren Seite der Oberschale (1) und der dem Mittelpunkt des Gehäuses zugewandten inneren Seite der Unterschale (2) angeordnet ist.

7. Mobiltelefon nach einem der vorhergehenden Ansprüche, wobei die Oberschale (1) und die Unterschale (2) im Bereich der Überlappung parallel zueinander angeordnet sind.

8. Mobiltelefon nach einem der vorhergehenden Ansprüche, wobei der Spalt (3) im Wesentlichen senkrecht zum Mittelpunkt des Gehäuses angeordnet ist.

9. Mobiltelefon nach einem der vorhergehenden Ansprüche, wobei die Unterschale (2) einen Rasthaken (4) aufweist, die Oberschale (1) eine Aufnahme (5) für den Rasthaken (4) aufweist, der Rasthaken (4) in die Aufnahme (5) einrastbar ist und der Rasthaken (4) im Bereich der Überlappung angeordnet ist.

10. Mobiltelefon nach Anspruch 9, wobei im Bereich der Aufnahme für den Rasthaken (4) die Oberschale (1) durchgehend ausgebildet ist.

11. Mobiltelefon nach einem der vorhergehenden Ansprüche, wobei das Mobiltelefon einen Gürtelclip (6) aufweist, der Gürtelclip (6) an der Unterschale (2) befestigbar ist und die Unterschale (2) zur Befestigung des Gürtelclips (6) durchgehend ausgebildet ist.

12. Mobiltelefon nach einem der vorhergehenden Ansprüche, wobei das Mobiltelefon eine Tastaturmatte und eine Dichtfläche aufweist, und die Dichtfläche umlaufend zwischen der Tastaturmatte und der Oberschale (1) angeordnet ist.
